# EUROPEAN PATENT SPECIFICATION

(11) **EP 1 656 802 B1**
(45) Date of publication and mention of the grant of the patent: **21.03.2007**
(21) Application number: 04744860.0
(22) Date of filing: 09.08.2004
(51) Int. Cl.: H04Q 7/20, H04B 7/185

(54) **TERMINAL ADAPTER FOR ASSOCIATING USER COMPONENTS AND EMULATING A NETWORK ENTITY**
ENDGERÄTEADAPTER ZUR VERBINDUNG VON NUTZERKOMPONENTEN UND ZUM EMULIEREN EINER NETZEINHEIT
ADAPTATEUR DE TERMINAL PERMETTANT D'ASSOCIER DES COMPOSANTS UTILISATEURS ET D'EMULER UNE ENTITE RESEAU

(30) Priority: 08.08.2003 US 493475 P; 07.11.2003 US 517865 P
(43) Date of publication of application: 17.05.2006
(73) Proprietor: Slieve Mish Inventions Limited, Tralee, County Kerry (IE)
(72) Inventor: Waugh, Guy, Surrey GU26 6BN (GB); Fitzgerald, Michael, Tralee, County Kerry (IE); Scanlon, Patrick, County Dublin (IE); Kenny, Liam, County Kilkenny (IE); Lord, Richard, Cork (IE); Young, Christopher, Wicklow (IE); Godley, Michael, Tralee, County Kerry (IE); Steinmetz-Herve, Gregory, County Kerry (IE)
(74) Representative: Weldon, Michael James
(86) International application number: PCT/IE2004/000109
(87) International publication number: WO 2005/015923

(56) References cited:
- WO-A-94/28684
- WO-A-99/67960
- US-A- 6 052 604

## Description

### Field of the Invention

The invention relates to cellular networks particularly but not exclusively for vehicles such as ships and aircraft.

### Prior Art Discussion

In certain circumstances wireless communications may interfere or may be perceived to interfere with other equipment internal to a craft. Also, wireless communications may interfere or may be perceived to interfere with other wireless communications equipment external to a craft. A further problem is that there is limited bandwidth available for vehicle-to-earth communication, and so use of this bandwidth must be optimised. There is therefore a requirement for a system and method to allow convenient use of cellular identity by users on ships or aircraft. Systems according to the prior art are established by the published US-A-6 052 604 and WO 99/67960.

### SUMMARY OF THE INVENTION

According to the invention, there is provided a terminal adapter for a mobile network, the adapter comprising a plurality of user-side interfaces for communicating with user components, a terminal controller for dynamically associating user components connected to the interfaces to provide at least one mobile station in real time, and a mobile network entity emulator for communicating with a mobile network entity via a network-side interface. Thus, the adapter brings "logical" mobile stations of transiently associated components into the core of the mobile network. This avoids the mobile station to transceiver conventional link. It also allows a limited number of sets components to be used for providing mobile communication services to a larger number of potential users.

In one embodiment, the user-side interfaces comprise an interface to audio input/output components.

In another embodiment, said interface communicates with input/output devices of an in-flight entertainment system.

In a further embodiment, the user-side interfaces include an interface to user display devices.

In one embodiment, said interface communicates with display devices of an in-flight entertainment system.

In another embodiment, the user-side interfaces include an interface to subscriber identity module readers.

In a further embodiment, said user-side interfaces include an interface to a data input/output device.

In one embodiment, the terminal controller dynamically associates user components by establishing a context in real time upon detection of insertion of a subscriber identity module in a reader user component.

In another embodiment, the context includes binding to a user interface component.

In a further embodiment, the terminal controller dynamically manages queues if the current usage requires more bandwidth than is available for the mobile network.

In one embodiment, the network side interface emulates a network entity so that the network entity with which it communicates operates in a conventional manner with internal network operations.

In another embodiment, the adapter dynamically links a mobile equipment unit with user devices to complete a mobile station.

In a further embodiment, the mobile equipment units are encoded in software.

In one embodiment, the mobile equipment units are configured in hardware.

In another embodiment, the emulator comprises a physical interface and protocol stacks to handle signalling, voice streams, and data streams.

In a further embodiment, the emulator further comprises application programming interfaces (APIs) to the protocol stacks and interface.

In one embodiment, the terminal controller communicates with the emulator via the APIs.

In another embodiment, the terminal controller dynamically binds to an API of the emulator as an operation of the context.

In a further embodiment, the emulator comprises a signalling monitor for monitoring incoming network traffic, and communicating incoming traffic information to the emulator.

In one embodiment, the signalling monitor resides between mobile network elements.

In another aspect of the invention, there is provided a mobile network communication system comprising a terminal adapter as described above and mobile network entities, at least one of which is linked with the emulator of the terminal adapter.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagram showing a communication system of the invention;
Fig. 2 is a diagram showing user terminal devices and a terminal adapter of the system in more detail;
Fig. 3 is a message sequence chart showing aspects of operation of the system of Fig. 2;
Fig. 4 is diagram of an alternative terminal adapter;
Fig. 5 is a message sequence chart for operation of the adapter of Fig. 4; and
Fig. 6 is a diagram of a further terminal adapter.

### Description of the Embodiments

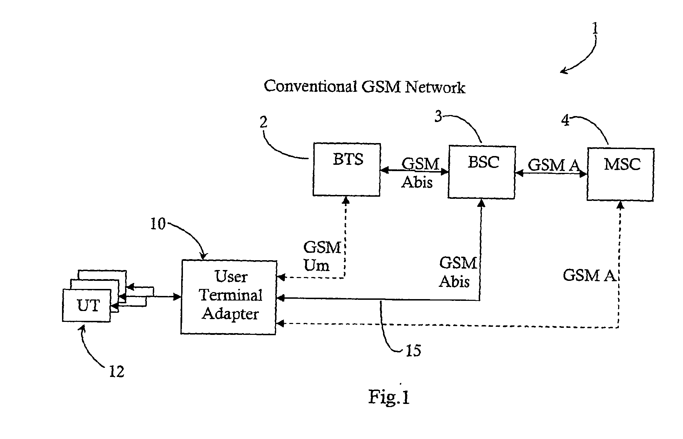

Referring to Fig. 1 a communication system 1 comprises:
a base transceiver station (BTS) 2;
a base switching centre (BSC) 3 connected to the BTS 2 by a GSM Abis interface 15; and
a mobile switching centre (MSC) 4 connected to the BSC 3 by a GSM A interface.

The system 1 further comprises a terminal adapter 10 interfacing on one side with user terminal devices 12 and on the other side with the BSC 3 via an Abis interface 15. As the interrupted lines indicate, in another embodiment an adapter is linked with the BTS 2 by a GSM Um interface, and in another embodiment an adapter is linked with the MSC 4 by a GSM A interface. The MSC communicates with an earth station via a satellite link, not shown. Thus, the system is essentially a mobile network which is movable with the vehicle or craft.

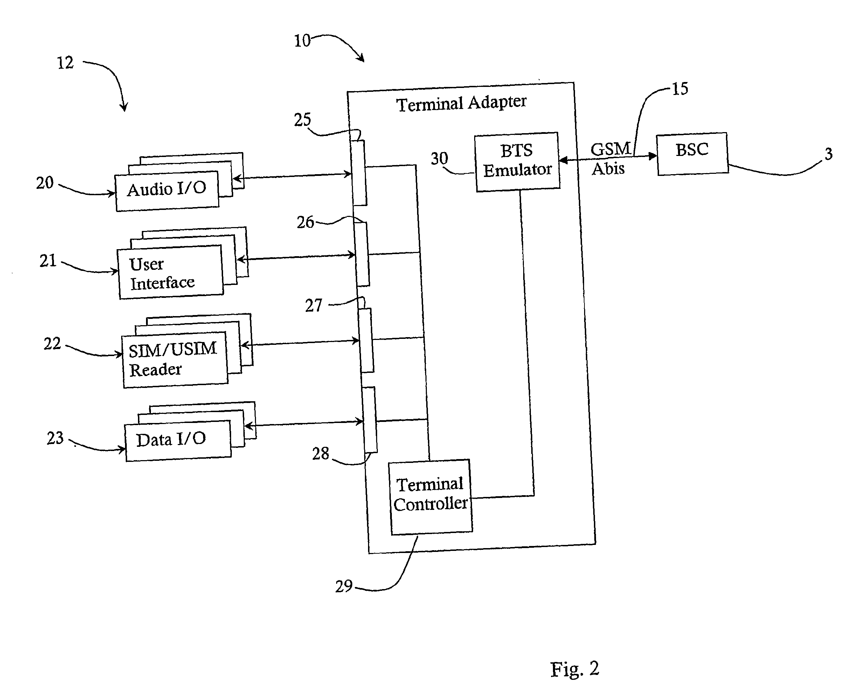

Referring to Fig. 2 on the user side of the adapter 10 the user devices 12 comprise:
- 20:: Audio devices for use by subscribers to send and receive voice signals. These audio devices are connected to the adapter 10 using a wired link. The audio devices 20 are a combination of headset (ear piece) and microphone, such as used in in-flight entertainment (IFE) systems.
- 21:: User interface devices to control making and receiving calls, sending and receiving messages, SIM/USIM interaction (PIN management, phone book management etc.), call register use, and other conventional cellular phone operations. These user interface devices 21 comprise a screen and keypad. The keypad may be replaced with a touch screen in one embodiment. These audio devices are connected to the adapter 10 using a wired link.
- 22:: A SIM/USIM reader to read data from a SIM/USIM placed in it, to write data to the SIM/USIM and invoke operations on the SIM/USIM. The SIM/USIM cards are used to support conventional GSM call handling operations such as phone number storage and user authentication. The link between the SIM/USIM reader 22 and the adapter 10 is wired. In another embodiment the SIM/USIM functions can be implemented in software not requiring a physical card to be present.
- 23:: A data input/output port for connection to user devices to make and receive data calls. These devices include but are not limited to: laptops, PDAs, telemetry devices, card readers, RFID tag readers or other computing devices needing to send or receive data over the cellular network. These audio devices are connected to the adapter 10 using a wired link.

The adapter 10 comprises internal interfaces 25, 26, 27 and 28, for communicating with the audio i/o 20, the user interfaces 21, the readers 22, and the data i/o respectively. The interfaces 25-28 each comprise a hardware port and functionality in a software terminal controller 29. The controller 29 dynamically associates the various user-side devices to provide a number of mobile stations in real time, each comprising disparate parts which are only temporarily associated. For example, every seat in an aircraft may have a set of user devices 12, some of which are also in-flight entertainment equipment. However while there may therefore be 200 sets of user devices, the controller 29 will only have several mobile stations dynamically formed at any one time. This helps to optimise use of the available satellite earth link: every passenger having the option of making/receiving calls by inverting his SIM card in the reader 22, but only several stations being configured at any time.

The terminal controller 29 continuously monitors the SIM reader interface 27 for events such as SIM Present and SIM Removed. Commands and data are exchanged between the SIM reader and the controller 29 using a hardware interface. Voice signals to and from the Audio I/O devices are transcoded to and from an appropriate format (such as GSM 16kBit/S or 64kBit/S PCM) depending on the interface used on the network side. Data streams to and from the Data I/O devices on the user side are transcoded to and from an appropriate format (such as GSM/GPRS or GSM/CSD) depending on the interface used on the network side.

The controller 29 has an open interface for communicating with the user interface devices which can be customised to suit the user's environment. This communication is Web-based (i.e. HTTP/HTML) based. Each time a new SIM card is detected the controller 29 creates a context which identifies the particular user and network devices that need to be associated to handle the event. The controller 29 binds to any APIs that are needed such as an API to the BTS emulator 30 and an API to the user interface 21. The controller 29 uses this context and the API to route data and signalling information to and from the devices and APIs that have been associated. When the SIM is no longer present, the controller 29 releases the APIs and the devices and then deletes the context so that the devices can be used for a new session, possibly with a different SIM or user.

Thus, a passenger in an aircraft can insert his or her SIM card in a conveniently-located reader 22 and use in-flight entertainment equipment to make and receive calls. The links between the user-side components and the adapter are wireless. Also, the mobile stations are only "formed" as required and so there will be much fewer than the number of passengers. This optimises use of resources and of available bandwidth to ground.

On the network side the adapter 10 comprises a BTS emulator 30 for communicating with the BSC 3. The BTS emulator 30 comprises:
a physical interface, either IP (Ethernet) based or CEPT E1 based, to the BSC,
protocol stacks to handle signalling, voice streams, data streams and Operations & Maintenance data to and from the BSC, and
APIs to these protocol stacks and interface.

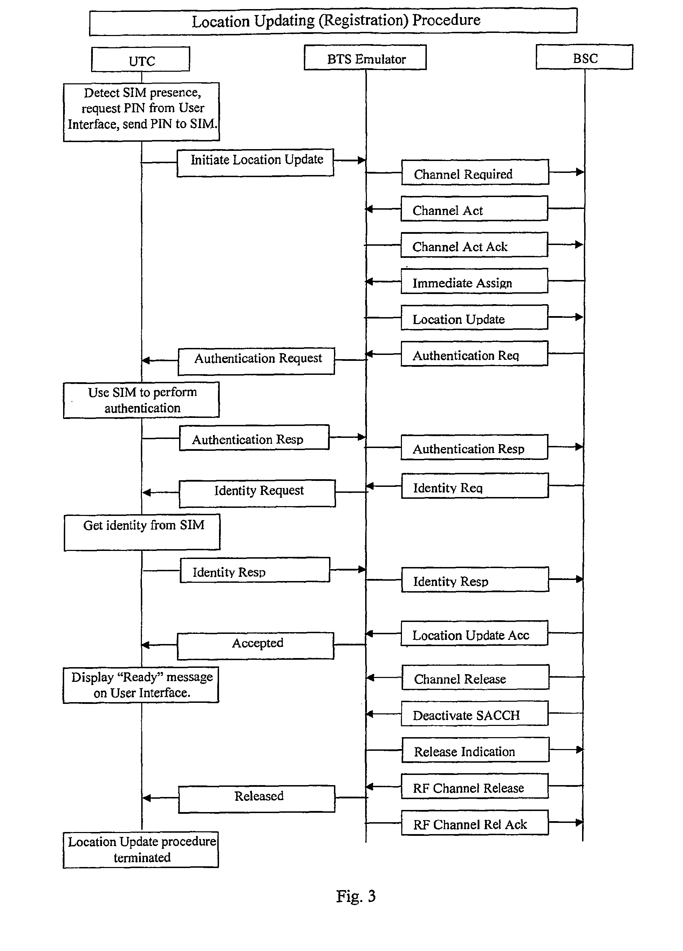

The above-mentioned APIs are used by the terminal controller 29 to exchange information between the user devices 12 and the BSC 3. An example of this interworking for a Location Updating Procedure is shown in the message sequence chart of Fig. 3. In this chart the messages exchanged between the BTS emulator 30 and the BSC 3 are standard GSM messages.

A major advantage of emulating a network element within the adapter 10 is that it allows the wireless part of the GSM network to be bypassed thereby preventing potential radio frequency interference in sensitive environments such as aircraft. Furthermore, by emulating standardised network elements it is possible to connect to unmodified cellular network entities using standard interfaces.

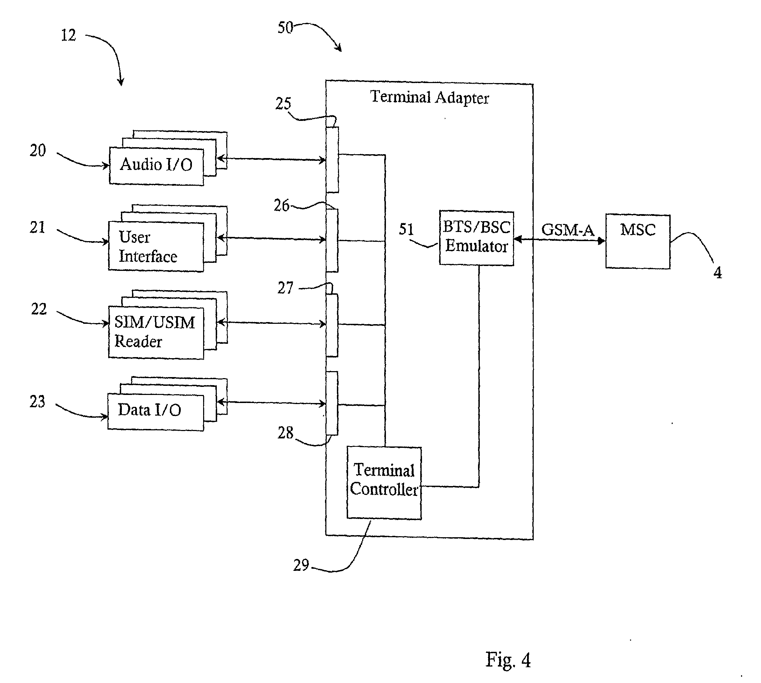

Referring to Fig. 4 a terminal adapter 50 is similar to the adapter 10 on the user side and like parts are assigned the same reference numerals. However on its network side it has a BTS/BSC emulator 51. This comprises:
a physical interface CEPT E 1 based, to the MSC 4,
protocol stacks to handle signalling, voice streams, and data streams to and from the MSC 4, and
APIs to these protocol stacks and interface.

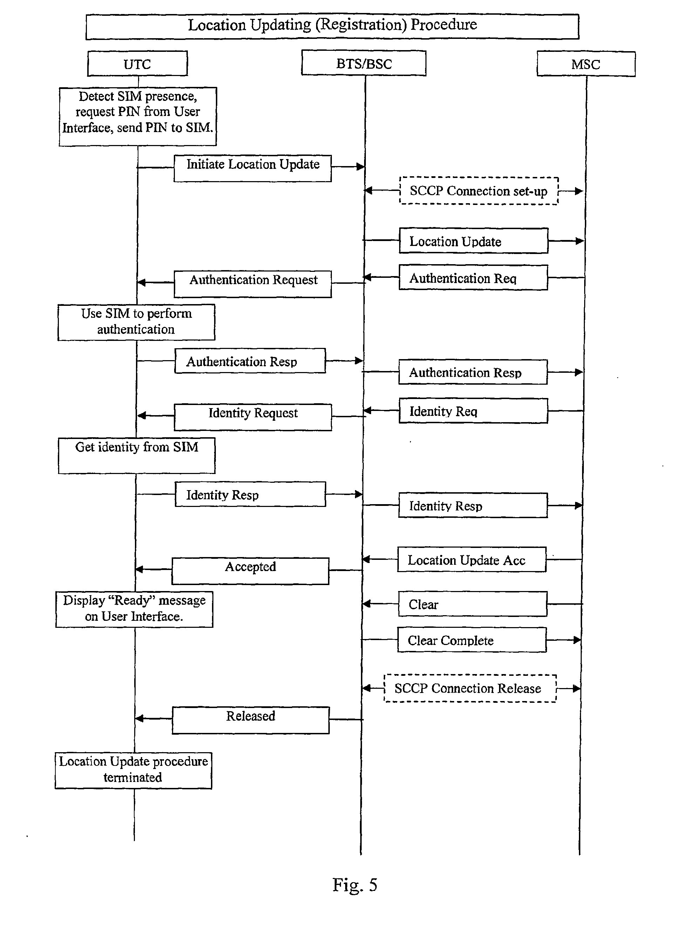

The above-mentioned APIs are used by the terminal controller 29 to exchange information between the user devices 12 and the MSC. An example of this interworking for a Location Updating Procedure is shown in the message sequence chart of Fig. 5. In this chart the messages exchanged between the BTS/BSC emulator 51 and the MSC 4 are standard GSM messages.

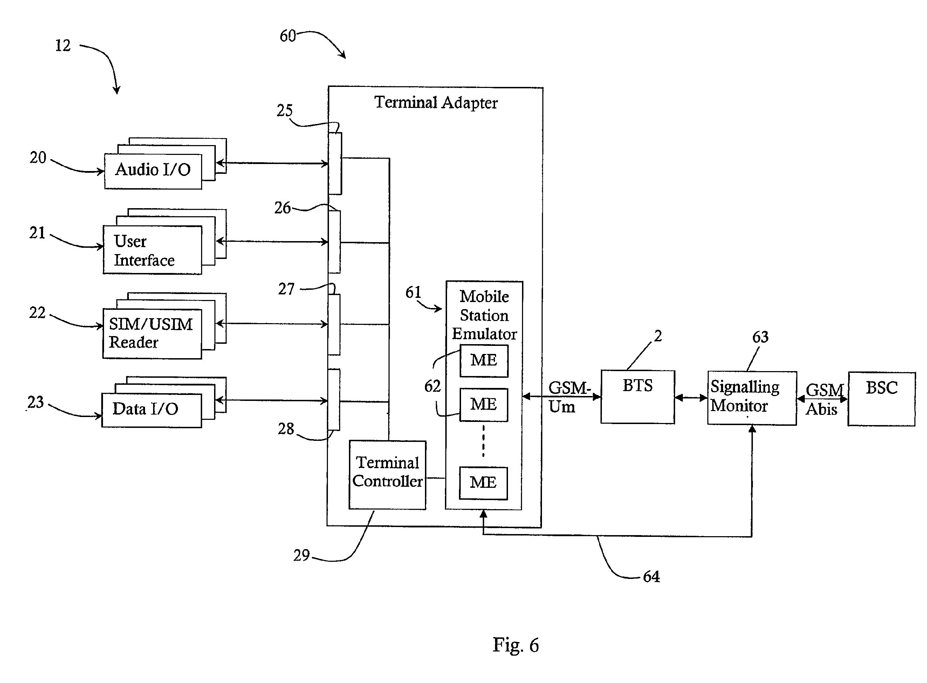

Referring to Fig. 6 a further terminal adapter 60 comprises a mobile station emulator 61. The emulator 61 comprises a number N of hardware mobile equipment units (MEs) 62 providing a GSM-Um interface to the network's BTS 2. The adapter 60 also comprises a signalling monitor 63 disposed between the BTS 2 and the BSC 3.

In more detail, the mobile station emulator 61 comprises:
the mobile equipment devices (ME) 62 which are dynamically assigned to user devices 12 when needed to handle calls, messages or mobility management events such as registration,
a wired RF network linking the MEs 62 to the BTS 2,
the signalling monitor 63, which monitors incoming cellular network signalling traffic, and
a wired network 64 which links the emulator core with the signalling monitor 63.

The following describes operation of the communication systems of the invention in more detail. It can be split into five broad areas, namely:
Registration
Mobile Originated Service Request (e.g. MO voice call, MO SMS, MO Data call)
Mobile Terminated Service Request (e.g. MT voice call, MT SMS, MT Data call)
Detach
SIM/USIM services.

### Taking each in turn:

### Embodiment with Abis Interface (Fig. 2)

### (i) Registration

The user inserts his/her SIM/USIM card into a SIM/USIM reader 22 slot. If activated on the SIM/USIM, the terminal adapter 10 prompts the user to enter the PIN number on the user interface 21. The adapter 10 detects the SIM/USIM insertion and initiates a registration procedure by sending a standard cellular registration message to the BSC 3.

The registration request is handled by the GSM entities 3 and 4 in a conventional way.

Authentication requests from the GSM network are handled by the terminal adapter 10 using the SIM/USIM in the associated SIM/USIM reader 22.

Once the registration has been acknowledged by the GSM network, the terminal adapter 10 registers the user as active.

Any information provided by the network such as TMSI is stored on the SIM/USIM.

If the procedure fails for whatever reason, the terminal adapter 10 will send an appropriate message to the user console. If the procedure is successful the terminal adapter 10 sends an indication to the user interface 21 which displays an appropriate message such as "Service Available".

The user may now send and receive calls and messages. The user may also use services provided by the SIM/USIM such as phone-book.

### (ii) Mobile Originated Service Request

Mobile originated service requests include voice calls, SMS messages, data calls, and supplementary service requests. The user composes the code for the requested service (e.g. phone number, supplementary service code) on the user interface 21 and selects the "send" option.

The adapter 10 receives the code from the user interface 21 and sends the standard service request to the GSM network. The service request is handled by the GSM network in a conventional way. If the procedure fails for whatever reason, the terminal adapter 10 will send an appropriate message to the user interface 12.

### (iii) Mobile Terminated Service Request

Mobile Terminated service requests include voice calls, SMS messages, and data calls.

All users logged onto the system are registered in the GSM network as being located and camping onto the adapter 10 which behaves like a conventional GSM BTS. Incoming service requests will therefore result in the GSM network sending a paging request to the adapter 10 in the conventional way.

The user is alerted to the incoming service request by the user interface 21. In the case of a voice call the user can choose to accept or reject the request. In the case of an incoming SMS, the message will be stored in the SIM/USIM. Any information provided by the network such as caller identity is stored on the SIM/USIM. If the procedure fails for whatever reason, the adapter 10 will send an appropriate message to the user interface 21.

### (iv) Detach

The user removes his/her SIM/USIM from the SIM/USIM reader 22 slot. The SIM/USIM reader 22 sends a SIM/USIM removal indication to the adapter 10.

The user adapter 10 sends a standard detach request to the GSM network. The detach request is handled by the GSM network in a conventional way.

If the procedure is successful the adapter 10 sends an indication to the user interface 21 which displays an appropriate message such as "Please Insert SIM/USIM".

### (v) SIM/USIM Services

SIM/USIM services include, but are not limited to phone-book management, security functions (PUK, change PIN), SIM Toolkit applications, and Java applications.

Once the user has inserted his/her SIM/USIM and entered the associated PIN code correctly all SIM services are made available to the user at the user interface 21.

### Embodiment with A Interface (Fig. 4)

In this case the adapter 10 interfaces directly with the MSC 4, and the operation is much as described above for the Fig. 2 embodiment having the Abis interface.

### Embodiment with Um Interface (Fig. 6)

Regarding the embodiment in which the adapter has a MS emulator 61, the following are the steps. It should be noted that in this embodiment there are multiple hardware mobile equipments (MES) 62, whereas in the embodiments of Figs. 2 and 4 this functionality is implemented in software.

### (i) Registration

Once the adapter 60 has successfully received the user's PIN, it assigns an ME 62 to the user for the duration of the procedure. There are typically fewer ME 62 devices than user devices 12. If no ME 62 is available the adapter 60 queues the registration request until one becomes available and then continues with the procedure. The adapter 60 is configured to give priority to different requests (registration, SMS, MT call, MO call ...) depending on the operator's preferences.

Once the registration procedure has been completed the ME 62 is released and is made available for other operations.

### (ii) Mobile Originated Service Request

Once the adapter 60 has received the service activation from the user, it assigns an ME 62 to the user for the duration of the procedure. There are typically fewer ME devices than user devices 12. If no ME 62 is available the adapter 60 queues the MO service request until one becomes available and then continues with the procedure. The adapter 60 can be configured to give priority to different requests (registration, SMS, MT call, MO call ...) depending on the operator's preferences.

Once the MO Service Request procedure has been completed the ME 62 is released and is made available for other operations.

### (iii) Mobile Terminated Service Request

Mobile Terminated service requests include voice calls, SMS messages, and data calls. All users logged onto the system are registered in the GSM network as being located and camping onto the adapter 10 which behaves like a conventional MS. Incoming service requests will therefore result in the GSM network sending a paging request to the adapter 60 in the conventional way.

Because the ME's 62 are allocated dynamically, the paging request is intercepted in the signalling monitor 63 which sends a message to the adapter 60 indicating the pending paging request and associated IMSI. This message is sent on the link 64.

The adapter 60 chooses an available mobile equipment 62 and associates this ME 62 with the device 12 associated with the IMSI for the duration of the procedure.

If no ME 62 is available, the adapter 60 queues the request (for a configurable time) until one becomes available and then continues with the procedure. If an ME 62 does not become available before the timer expires, the adapter 60 instructs the signalling monitor 63 to discard the paging request. The adapter 60 can be configured to give priority to different requests (registration, SMS, MT call, MO call ...) depending on the operator's preferences.

Once an ME 62 is ready, the adapter 60 instructs the signalling monitor to forward the pending paging request to the BTS 2. The BTS 2 pages the ME 62 in the conventional way.

Once the MT Service Request procedure has been completed the ME is released and is made available for other operations.

### (iv) Detach

Once the adapter 60 has received the SIM/USIM removal indication, it assigns an ME 61 to the user for the duration of the procedure. There are typically fewer ME devices than user devices 12. If no ME 61 is available the adapter 60 queues the registration request until one becomes available and then continues with the procedure. The adapter 60 can be configured to give priority to different requests (registration, SMS, MT call, MO call ...) depending on the operator's preferences.

Once the Detach procedure has been completed the ME 62 is released and is made available for other operations.

Considering the invention as a whole, it will be appreciated that the user device is directly integrated with other entities to be part of a mobile network, rather than communicating wirelessly in the conventional mobile station (MS)-to-BTS interface. This is very advantageous for environments such as aircraft, where there is the perception that wireless interfaces cause interference.

Another major advantage is that the adapter 10 coordinates operations across the user devices 12 (SIM/USIM reader, user interface, audio I/O device and data I/O port) and the GSM Abis, A, or Um interface. In GSM terms, this constitutes a virtual combined mobile station and BSS elements without any of the conventional GSM radio frequency components. It is very important that the user can use his or her own SIM or USIM card. This provides identification capability for roaming and billing, authentication for security and fraud prevention, and the card storage facilities such as phone book and personalisation information. In many cases the virtual combined mobile station can be achieved using existing facilities such as in-flight entertainment systems.

The invention is not limited to the embodiments described but may be varied in construction and detail. For example, the user devices (SIM/USIM Reader, User Interface, Audio I/O device and Data I/O device) and User Terminal Adapter 10 could be implemented as a single module. Another variation is where instead of interfacing to a GSM network using A or Abis, the system interfaces to any other conventional cellular network such as UMTS, CDMA, TDMA, etc. in a similar fashion. Also, some communication links between devices may be wireless provided this does not introduce a risk of interference. An example is that the SIM readers may communicate with the adapter via a Bluetooth wireless interface.

## Claims

1. A terminal adapter for a mobile network, the adapter comprising:
a plurality of user-side interfaces (25-28) for communicating with user components,
a terminal controller for dynamically associating user components connected to the interfaces (25-28) to provide at least one mobile station in real time, and
a mobile network entity emulator (30) for communicating with a mobile network entity via a network-side interface,
wherein the terminal controller (29) is adapted to dynamically associate user components by establishing a context in real time upon detection of insertion of a subscriber identity module in a reader user component, the context including binding to a user interface component,
the terminal adapter being **characterized in that** it is adapted to dynamically manage queues if the current usage requires more bandwidth than is available for the mobile network.

2. A terminal adapter as claimed in claim 1, wherein the user-side interfaces comprise an interface (25) to audio input/output components.

3. A terminal adapter as claimed in claim 2, wherein said interface (25) is adapted to communicate with input/output devices of an in-flight entertainment system.

4. A terminal adapter as claimed in any preceding claim, wherein the user-side interfaces include an interface (26) to user display devices.

5. A terminal adapter as claimed in claim 4, wherein said interface (26) is adapted to communicate with display devices of an in-flight entertainment system.

6. A terminal adapter as claimed in any preceding claim, wherein the user-side interfaces include an interface (27) to subscriber identity module readers.

7. A terminal adapter as claimed in any preceding claim, wherein said user-side interfaces include an interface (28) to a data input/output device.

8. A terminal adapter as claimed in any preceding claim, wherein the adapter is adapted to dynamically link a mobile equipment unit with user components to complete a mobile station.

9. A terminal adapter as claimed in claim 8, wherein the mobile equipment unit is encoded in software.

10. A terminal adapter as claimed in claim 8, wherein the mobile equipment unit is configured in hardware.

11. A terminal adapter as claimed in any preceding claim, wherein the emulator (30) comprises a physical interface and protocol stacks adapted to handle signalling, voice streams, and data streams.

12. A terminal adapter as claimed in claim 11, wherein the emulator (30, 51, 61) further comprises application programming interfaces (APIs) to the protocol stacks and interface.

13. A terminal adapter as claimed in claim 12, wherein the terminal controller (29) is adapted to communicate with the emulator (30, 51, 61) via the APIs.

14. A terminal adapter as claimed in any preceding claim, wherein the terminal controller (29) is adapted to dynamically bind to an API of the emulator as an operation of the context.

15. A terminal adapter as claimed in any preceding claim, wherein the emulator comprises a signalling monitor (63) for monitoring incoming network traffic, and for communicating incoming traffic information to the emulator.

16. A terminal adapter as claimed in claim 15, wherein the signalling monitor (63) resides between mobile network entities.

17. A mobile network communication system comprising a terminal adapter of any preceding claim and mobile network entities, at least one of which is linked with the emulator of the terminal adapter.

## Patentansprüche

1. Endgeräteadapter für ein Mobilnetz, wobei der Adapter Folgendes umfasst:
eine Vielzahl von benutzerseitigen Schnittstellen (25-28) zum Kommunizieren mit Benutzerkomponenten
einen Endgeräte-Kontroller zum dynamischen Assoziieren von mit den Schnittstellen (25-28) verbundenen Benutzerkomponenten, um mindestens eine Mobilstation in Echtzeit bereitzustellen, und
einen Mobilnetzinstanz-Emulator (30), zum Kommunizieren mit einer Mobilnetzinstanz über eine netzseitige Schnittstelle,
wobei der Endgeräte-Kontroller (29) dazu angepasst ist, Benutzerkomponenten dynamisch zu assoziieren, indem bei Erfassung des Einfügens eines Teilnehmer-Identifizierungsmoduls in eine Lesegerät-Benutzerkomponente ein Kontext in Echtzeit etabliert wird, wobei der Kontext die Anbindung an eine Benutzerschnittstellen-Komponente umfasst,
wobei der Endgeräteadapter **dadurch gekennzeichnet ist, dass** er dazu angepasst ist, dynamisch Warteschlangen zu verwalten, wenn die aktuelle Nutzung mehr Bandbreite benötigt als für das Mobilnetz verfügbar ist.

2. Endgeräteadapter nach Anspruch 1, wobei die benutzerseitigen Schnittstellen eine Schnittstelle (25) an Audio-Eingabe-/Ausgabekomponenten umfassen.

3. Endgeräteadapter nach Anspruch 2, wobei die Schnittstelle (25) dazu angepasst ist, mit Eingabe-/Ausgabevorrichtungen eines Bordunterhaltungssystems eines Flugzeugs zu kommunizieren.

4. Endgeräteadapter nach einem der vorangehenden Ansprüche, wobei die benutzerseitigen Schnittstellen eine Schnittstelle (26) an Benutzeranzeigevorrichtungen umfassen.

5. Endgeräteadapter nach Anspruch 4, wobei die Schnittstelle (26) dazu angepasst ist, mit Anzeigevorrichtungen eines Bordunterhaltungssystems eines Flugzeugs zu kommunizieren.

6. Endgeräteadapter nach einem der vorangehenden Ansprüche, wobei die benutzerseitigen Schnittstellen eine Schnittstelle (27) an Teilnehmer-Identifizierungsmodul-Lesegeräte umfassen.

7. Endgeräteadapter nach einem der vorangehenden Ansprüche, wobei die benutzerseitigen Schnittstellen eine Schnittstelle (28) an eine Daten-Eingabe-/Ausgabevorrichtung umfassen.

8. Endgeräteadapter nach einem der vorangehenden Ansprüche, wobei der Adapter dazu angepasst ist, eine Mobilgeräteeinheit dynamisch mit Benutzerkomponenten zu verbinden, um eine Mobilstation fertigzustellen.

9. Endgeräteadapter nach Anspruch 8, wobei die Mobilgeräteeinheit in Software codiert ist.

10. Endgeräteadapter nach Anspruch 8, wobei die Mobilgeräteeinheit in Hardware konfiguriert ist.

11. Endgeräteadapter nach einem der vorangehenden Ansprüche, wobei der Emulator (30) eine physikalische Schnittstelle und Protokollstapel umfasst, die dazu angeordnet sind, Signalübertragung, Sprachströme und Datenströme zu handhaben.

12. Endgeräteadapter nach Anspruch 11, wobei der Emulator (30, 51, 61) weiter Anwendungsprogrammierungs-Schnittstellen (APIs) an die Protokollstapel und Schnittstelle umfasst.

13. Endgeräteadapter nach Anspruch 12, wobei der Endgeräte-Kontroller (29) dazu angepasst ist, über die APIs mit dem Emulator (30, 51, 61) zu kommunizieren.

14. Endgeräteadapter nach einem der vorangehenden Ansprüche, wobei der Endgeräte-Kontroller (29) dazu angepasst ist, sich als ein Vorgang des Kontexts dynamisch an eine API des Emulators anzubinden.

15. Endgeräteadapter nach einem der vorangehenden Ansprüche, wobei der Emulator einen Signalübertragungs-Monitor (63) umfasst, um eingehenden Netzverkehr zu überwachen und um Informationen zu eingehendem Verkehr an den Emulator zu übertragen.

16. Endgeräteadapter nach Anspruch 15, wobei der Signalübertragungs-Monitor (63) zwischen Mobilnetzinstanzen residiert.

17. Mobilnetz-Kommunikationssystem, umfassend einen Endgeräteadapter nach einem der vorangehenden Ansprüche und Mobilnetzinstanzen, von denen mindestens eine mit dem Emulator des Endgeräteadapters verbunden ist.

## Revendications

1. Un adaptateur de terminal destiné à un réseau mobile, l'adaptateur comprenant :
une pluralité d'interfaces côté utilisateur (25 à 28) destinées à communiquer avec des composants utilisateur,
un contrôleur de terminal destiné à associer dynamiquement des composants utilisateur connectés aux interfaces (25 à 28) afin de fournir au moins une station mobile en temps réel, et
un émulateur d'entité de réseau mobile (30) destiné à communiquer avec une entité de réseau mobile via une interface côté réseau,
où le contrôleur de terminal (29) est adapté de façon à associer dynamiquement des composants utilisateur en établissant un contexte en temps réel en cas de détection de l'insertion d'un module d'identification d'abonné dans composant utilisateur de lecture, le contexte incluant une liaison avec un composant interface utilisateur, l'adaptateur de terminal étant **caractérisé par le fait qu'**il est adapté à gérer dynamiquement des files d'attente si l'usage courant exige une bande passante plus large que celle disponible pour le réseau mobile.

2. Un adaptateur de terminal selon la Revendication 1, où les interfaces côté utilisateur comprennent une interface (25) vers des composants d'entrée/sortie audio.

3. Un adaptateur de terminal selon la Revendication 2, où ladite interface (25) est adaptée de façon à communiquer avec des dispositifs d'entrée/sortie d'un système de divertissement en vol.

4. Un adaptateur de terminal selon l'une quelconque des Revendications précédentes, où les interfaces côté utilisateur incluent une interface (26) vers des dispositifs d'affichage utilisateur.

5. Un adaptateur de terminal selon la Revendication 4, où ladite interface (26) est adaptée de façon à communiquer avec des dispositifs d'affichage d'un système de divertissement en vol.

6. Un adaptateur de terminal selon l'une quelconque des Revendications précédentes, où les interfaces côté utilisateur incluent une interface (27) vers des lecteurs de module d'identification d'abonné.

7. Un adaptateur de terminal selon l'une quelconque des Revendications précédentes, où lesdites interfaces côté utilisateur incluent une interface (28) vers un dispositif d'entrée/sortie de données.

8. Un adaptateur de terminal selon l'une quelconque des Revendications précédentes, où l'adaptateur est adapté de façon à relier dynamiquement une unité d'équipement mobile à des composants utilisateur afin de réaliser une station mobile.

9. Un adaptateur de terminal selon la Revendication 8, où l'unité d'équipement mobile est codée dans un logiciel.

10. Un adaptateur de terminal selon la Revendication 8, où l'unité d'équipement mobile est configurée dans un matériel.

11. Un adaptateur de terminal selon l'une quelconque des Revendications précédentes, où l'émulateur (30) comprend une interface physique et des piles de protocoles adaptées de façon à traiter une signalisation, des trains de données vocales et des trains de données.

12. Un adaptateur de terminal selon la Revendication 11, où l'émulateur (30, 51, 61) comprend en outre des interfaces de programme d'application (API) vers les piles de protocole et l'interface.

13. Un adaptateur de terminal selon la Revendication 12, où le contrôleur de terminal (29) est adapté de façon à communiquer avec l'émulateur (30, 51, 61) par l'intermédiaire des API.

14. Un adaptateur de terminal selon l'une quelconque des Revendications précédentes, où le contrôleur de terminal (29) est adapté de façon à être relié dynamiquement à une API de l'émulateur en tant qu'opération du contexte.

15. Un adaptateur de terminal selon l'une quelconque des Revendications précédentes, où l'émulateur comprend un moniteur de signalisation (63) destiné à surveiller le trafic réseau entrant et à communiquer des informations relatives au trafic entrant à l'émulateur.

16. Un adaptateur de terminal selon la Revendication 15, où le moniteur de signalisation (63) réside entre les entités de réseau mobile.

17. Un système de communication de réseau mobile comprenant un adaptateur de terminal selon l'une quelconque des Revendications précédentes et des entités de réseau mobile, dont l'une au moins est reliée à l'émulateur de l'adaptateur de terminal.
